# EUROPEAN PATENT APPLICATION

(11) **EP 2 551 491 A2**
(43) Date of publication of application: **30.01.2013**
(21) Application number: 12177907.8
(22) Date of filing: 25.07.2012
(51) Int. Cl.: F02C 7/236, F23R 3/28

(54) **System for conditioning air flow into a multi-nozzle assembly**

(30) Priority: 29.07.2011 US 201113194465
(71) Applicant: General Electric Company, Schenectady, NY 12345 (US)
(72) Inventor: Stewart, Jason Thurman, Greenville, SC South Carolina 29615 (US); Berry, Jonathan Dwight, Greenville, SC South Carolina 29615 (US)
(74) Representative: Cleary, Fidelma

(57) **Abstract**

A system includes a turbine fuel nozzle assembly (39). The turbine fuel nozzle assembly (39) includes a first fuel nozzle (12, 42, 44) including a first air inlet (62) and a second fuel nozzle (12, 42, 44) including a second air inlet (62). The turbine fuel nozzle assembly (39) also includes a first inlet flow conditioner (64) disposed adjacent the first air inlet (62) of the first fuel nozzle (12, 42, 44), wherein the first air inlet flow conditioner (64) extends only partially around the first fuel nozzle (12, 42, 44). The turbine fuel nozzle assembly (39) further includes a second inlet flow conditioner (64) disposed adjacent the second air inlet (62) of the second fuel nozzle (12, 42, 44), wherein the second air inlet flow conditioner (64) extends only partially around the second fuel nozzle (12, 42, 44), and the second inlet flow conditioner (64) is separate from the first inlet flow conditioner (64).

## Description

### BACKGROUND OF THE INVENTION

The subject matter disclosed herein relates to gas turbine engines and, more specifically, to a system for conditioning air flow into a multi-nozzle assembly.

Fuel-air mixing affects engine performance and emissions in a variety of engines, such as gas turbine engines. For example, a gas turbine engine may employ one or more fuel nozzles to intake air and fuel to facilitate fuel-air mixing in a combustor. In addition, each of these fuel nozzles may include multiple tubes for fuel-air mixing. The fuel nozzles may be located in a head end portion of the combustor, and may be configured to intake an air flow to be mixed with a fuel flow. Unfortunately, air may not be distributed evenly to each tube within each fuel nozzle, thus, affecting the overall engine performance, emissions, and flame holding margins.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In accordance with the present invention, a system includes a turbine fuel nozzle assembly. The turbine fuel nozzle assembly includes a first fuel nozzle including a first air inlet and a second fuel nozzle including a second air inlet. The turbine fuel nozzle assembly also includes a first inlet flow conditioner disposed adjacent the first air inlet of the first fuel nozzle, wherein the first air inlet flow conditioner extends only partially around the first fuel nozzle. The turbine fuel nozzle assembly further includes a second inlet flow conditioner disposed adjacent the second air inlet of the second fuel nozzle, wherein the second air inlet flow conditioner extends only partially around the second fuel nozzle, and the second inlet flow conditioner is separate from the first inlet flow conditioner.

### BRIEF DESCRIPTION OF THE DRAWINGS

Embodiments of the present invention will now be described, by way of example only, with reference to the accompanying drawings in which:
FIG. 1 is a block diagram of an embodiment of a turbine system having a fuel nozzle assembly with features to evenly distribute air flow within each fuel nozzle;
FIG. 2 is a partial cross-sectional side view of an embodiment of a combustor of FIG. 1, illustrating fuel nozzle assembly with multiple fuel nozzles;
FIG. 3 is a front plan view of an embodiment of the fuel nozzle assembly with the multiple fuel nozzles of FIG. 2, taken along line 3-3, illustrating each outer fuel nozzle associated with an inlet flow conditioner;
FIG. 4 is a perspective view of an embodiment of the outer fuel nozzle with the associated inlet flow conditioner of FIG. 3;
FIG. 5 is a cross-sectional view of an embodiment of the outer fuel nozzle with the associated inlet flow conditioner of FIG. 3, taken along line 5-5;
FIG. 6 is a cross-sectional view of an embodiment of the outer fuel nozzle with the associated inlet flow conditioner of FIGS. 3 and 4, taken along line 6-6;
FIG. 7 is a perspective view of an embodiment of the inlet flow conditioner of FIGS. 3-6; and
FIG. 8 is a side view of an embodiment of the inlet flow conditioner of FIG. 7.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The disclosed embodiments are directed to systems for turning, guiding, and conditioning air flow into each fuel nozzle of a multi-nozzle assembly in a gas turbine engine, thereby evenly distributing air flow within each fuel nozzle to improve air-fuel mixing and combustion. For example, the multi-nozzle assembly may include a plurality of fuel nozzles, each having an air inlet with an inlet flow conditioner. As discussed below, each air inlet and associated air inlet flow conditioner extends only partially around its respective fuel nozzle, rather then completely encircling the fuel nozzle. Further, the inlet flow conditioners are separate from each other. In certain embodiments, the multi-nozzle assembly may be a segmented fuel nozzle assembly having multiple sector fuel nozzles (e.g., fuel nozzle segments) that fit together like a puzzle, e.g., sectors of a circle, wherein each fuel nozzle segment includes an inlet flow conditioner (e.g., inlet flow conditioner segment). Collectively, the inlet flow conditioner segments may define a segmented inlet flow conditioner extending around a perimeter (e.g., a circular perimeter defining a circular nozzle area) of the segmented fuel nozzle assembly. In some embodiments, the inlet flow conditioners are removably coupled to an end cover supporting the multi-nozzle assembly (e.g., segmented fuel nozzle assembly). In other embodiments, the inlet flow conditioners are removably coupled to flanges of their respective fuel nozzles (e.g., fuel nozzle segments). The inlet flow conditioners may guide or turn air flow from an intake direction outside their respective fuel nozzles to a downstream direction inside their respective fuel nozzles, thereby guiding the air flow toward multiple air-fuel premixing tubes within each fuel nozzle. Each inlet flow conditioner may include multiple vanes configured to turn the air flow from the intake direction to the downstream direction, wherein at least two of the multiple vanes include different turning angles relative to one another. In addition, each vane may span only a portion of the air inlet of the respective fuel nozzle to provide air flow spaces between the air inlet and opposite tips of each vane. Further, each inlet flow conditioner may include a vane support coupled to a suction side of each of the multiple vanes, wherein the vane support extends from a mounting base to a free end portion that is free to move relative to its respective fuel nozzle (e.g., to enable thermal expansion). These systems are designed to evenly distribute the air flow to each air-fuel premixing tube within each fuel nozzle to improve the overall engine performance and to reduce emissions and the possibility of flame holding.

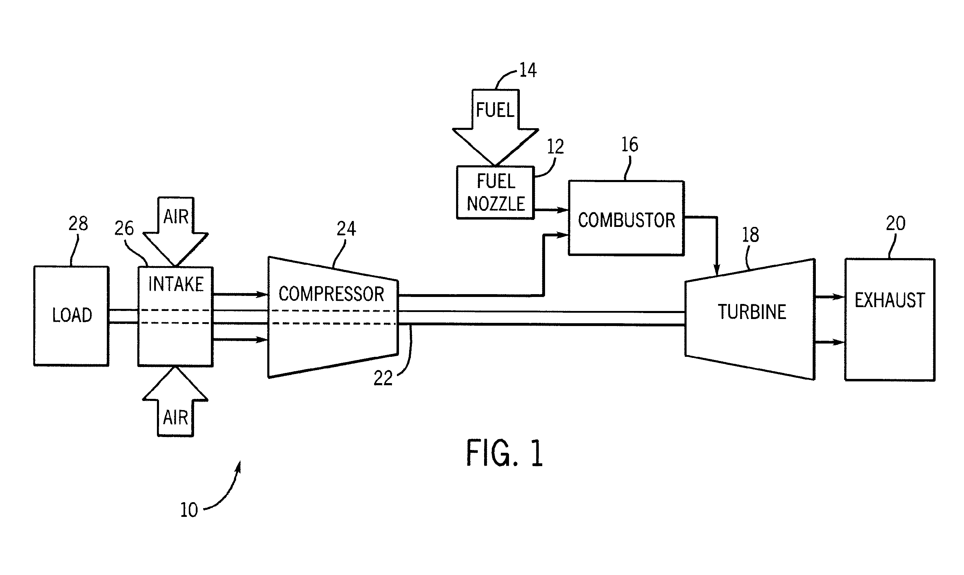

FIG. 1 is a block diagram of an embodiment of a turbine system 10 having a nozzle assembly with features to evenly distribute air flow within each fuel nozzle 12. As described in detail below, the disclosed turbine system 10 (e.g., a gas turbine engine) may employ a segmented fuel nozzle assembly (e.g., multi-nozzle assembly) with multiple sector fuel nozzles 12 (e.g., fuel nozzle segments) configured to improve the overall engine performance and to reduce emissions and the possibility of flame holding. For example, each sector fuel nozzle 12 may include a separate inlet flow conditioner (e.g., segment) extending only partially around the sector fuel nozzle, wherein a plurality of the inlet flow conditioner segments collectively define a segmented inlet flow conditioner extending around an outer perimeter of the segmented fuel nozzle assembly. Each inlet flow conditioner segment is configured to evenly distribute air to air-fuel premixing tubes within its respective sector fuel nozzle 12 to improve the overall engine performance and to reduce emissions.

The turbine system 10 may use liquid or gas fuel, such as natural gas and/or a hydrogen rich synthetic gas, to drive the turbine system 10. As depicted, the fuel nozzles 12 intake a fuel supply 14, mix the fuel with air, and distribute the fuel-air mixture into a combustor 16 in a suitable ratio for optimal combustion, emissions, fuel consumption, and power output. The turbine system 10 may include fuel nozzles 12 located inside one or more combustors 16. The fuel-air mixture combusts in a chamber within the combustor 16, thereby creating hot pressurized exhaust gases. The combustor 16 directs the exhaust gases through a turbine 18 toward an exhaust outlet 20. As the exhaust gases pass through the turbine 18, the gases force turbine blades to rotate a shaft 22 along an axis of the turbine system 10. As illustrated, the shaft 22 may be connected to various components of the turbine system 10, including a compressor 24. The compressor 24 also includes blades coupled to the shaft 22. As the shaft 22 rotates, the blades within the compressor 24 also rotate, thereby compressing air from an air intake 26 through the compressor 24 and into the fuel nozzles 12 and/or combustor 16. The shaft 22 may also be connected to a load 28, which may be a vehicle or a stationary load, such as an electrical generator in a power plant or a propeller on an aircraft, for example. The load 28 may include any suitable device capable of being powered by the rotational output of the turbine system 10.

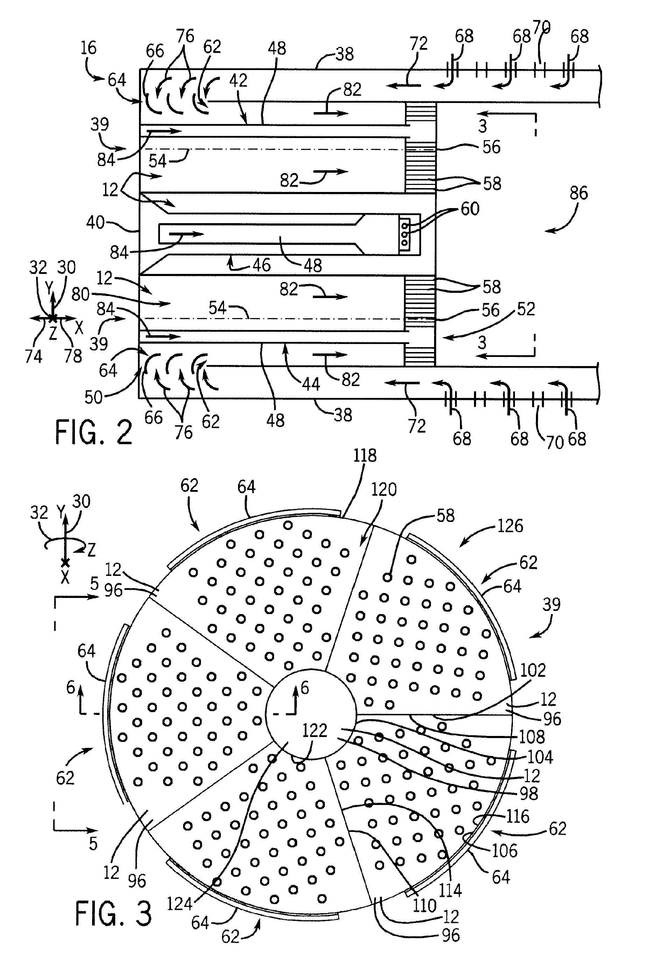

FIG. 2 is a cross-sectional side view of an embodiment of the combustor 16 of FIG. 1 with multiple sector fuel nozzles 12. As indicated by the legend, arrows 74 and 78 indicate an axial axis or direction, arrow 30 indicates a radial axis or direction, and cross 32 indicates a circumferential axis or direction. The combustor 16 includes an outer casing or flow sleeve 38, a fuel nozzle assembly 39 (e.g., multi-nozzle assembly), and an end cover 40. Multiple sector fuel nozzles 12 (e.g., outer fuel nozzles 42 and 44) and central fuel nozzle 46 are mounted within the combustor 16. Each sector fuel nozzle 12 includes a fuel conduit 48 extending from an upstream end portion 50 to a downstream end portion 52 of the nozzle 12. In certain embodiments, the outer fuel nozzles 42 and 44 may each include more than one fuel conduit 48 (e.g., two fuel conduits). As illustrated, the one or more fuel conduits 48 of each outer fuel nozzle 42 and 44 are radially offset from a central axis 54 of each fuel nozzle 42 and 44. In certain embodiments, the one or more fuel conduits 48 of each outer fuel nozzle 42 and 44 may extend along the central axis 54 of each fuel nozzle 42 and 44. Each outer fuel nozzle 42 and 44 includes a fuel chamber 56 coupled to the fuel conduit 48 and a plurality of tubes 58 (e.g., air-fuel premixing tubes) both near the downstream end portion 52. As illustrated, the central fuel nozzle 46 does not include the plurality of tubes 58 but, instead, includes a plurality of exit ports 60 for fuel. In other embodiments, the central fuel nozzle 46 may be structurally similar to the other fuel nozzles 42 and 44.

Each fuel nozzle 42 and 44 includes an air inlet 62. In addition, each fuel nozzle 42 and 44 is associated with an inlet flow conditioner 64 disposed adjacent each air inlet 62. As described in greater detail below, each inlet flow conditioner 64 is configured to evenly distribute air to all of the tubes 58 within each fuel nozzle 42 and 44 to improve air-fuel mixing, improve combustion, reduce emissions, and reduce the possibility of flame holding. As illustrated, each inlet flow conditioner 64 extends only partially around each sector fuel nozzle 12, rather than completely encircling the sector fuel nozzle 12. For example, as illustrated, each inlet flow conditioner 64 includes a plurality of vanes 66. As illustrated, the vanes 66 may be located on one side (e.g., outermost side) of each sector fuel nozzle 12. The vanes 66 may be angled to vary the penetrations of air flow radially into each sector fuel nozzle 12. In particular, each vane 66 of the plurality of vanes 66 may specifically distribute the air flow to different radial depths so that the overall air flow is more uniform. In certain embodiments, at least two vanes 66 of the plurality of vanes 66 may include different turning angles relative to one another. In some embodiments, the inlet flow conditioners 64 may be removably coupled to the end cover 40 supporting the fuel nozzle assembly 39. Alternatively, the inlet flow conditioners 64 may be removably coupled to flanges of the respective fuel nozzles 42 and 44.

Air (e.g., compressed air) enters the flow sleeve 38, as generally indicated by arrows 68, via one or more air inlets 70 and follows an upstream air flow path 72 in an axial direction 74 towards the end cover 40. The air encounters the inlet flow conditioner 64 of each outer fuel nozzle 42 and 44. Each inlet flow conditioner 64 turns or guides air flow, as generally indicated by arrows 76 from an intake direction (e.g., axial direction 74) outside its respective fuel nozzle 42 and 44 to a downstream direction (e.g., axial direction 78) inside the respective fuel nozzle 42 and 44 toward the plurality of premixing tubes 58. In particular, upon entering each fuel nozzle 42 and 44, the air flows into an interior flow path 80 and proceeds along a downstream air flow path 82 (e.g., air passage) extending from the air inlet 72 in the axial direction 78 through the plurality of tubes 58 of each fuel nozzle 42 and 44, where the air mixes with fuel before exiting the fuel nozzles 42 and 44.

Fuel flows in the axial direction 78 along a fuel flow path 84 through each fuel conduit 48 towards the downstream end portion 52 of each fuel nozzle 42 and 44. Fuel exits the central fuel nozzle 46 via the plurality of exit ports 60 into a combustion region 86. As to the outer fuel nozzles 42 and 44, the fuel from the fuel flow path 84 enters the fuel chamber 48 of each outer fuel nozzle 42 and 44 and mixes with air within the plurality of tubes 58. The outer fuel nozzles 42 and 44 inject the air-fuel mixture into the combustion region 86 in a suitable ratio to improve optimal combustion, emissions, fuel consumption, and power output. The disclosed embodiments employ the inlet flow conditioners 64 to provide an even distribution of air to each tube 58 within the outer fuel nozzles 42 and 44. As a result, the even distribution of air may reduce the possibility of flame holding or flashback, reduce emissions, and improve the overall engine performance.

FIG. 3 is a front plan view of an embodiment of the nozzle assembly 39 with the multiple sector fuel nozzles 12 of FIG. 2, taken along line 3-3, illustrating each outer fuel nozzle 96 associated with an inlet flow conditioner 64. As indicated by the legend, cross 94 indicate an axial axis or direction, arrow 30 indicates a radial axis or direction, and arrow 32 indicates a circumferential axis or direction. In the illustrated embodiment, the nozzle assembly 39 is a segmented fuel nozzle assembly 39 that is made up of sector fuel nozzles 12 (e.g., fuel nozzle segments), which fit together like pieces of a puzzle. In other words, the sector fuel nozzles 12 may closely fit together along a substantial portion their perimeter. Unfortunately, the segmented design of the assembly 39 may limit the entry of air to outer perimeter 118 of the entire assembly 39, which is only a portion of a perimeter 102 of each sector fuel nozzle 12. Accordingly, the illustrated embodiment includes the inlet flow conditioners 69 only partially around the perimeter 102 of each sector fuel nozzle 12, while ensuring uniform air flow.

The turbine nozzle assembly 39 includes multiple sector fuel nozzles 12 including a central fuel nozzle 98 and multiple outer fuel nozzles 96. Each outer fuel nozzle 96 includes multiple premixing tubes 58 (e.g., air-fuel premixing tubes), for example, arranged in rows. The number and arrangement of the premixing tubes may vary based on the design, function, and application of the fuel nozzles 96. The nozzle assembly 39 includes inlet flow conditioners 64 associated with each outer fuel nozzle 96. As mentioned above, each inlet flow conditioner 64 is configured to guide or turn air flow from an intake direction outside its respective fuel nozzle 96 to a downstream direction inside the respective fuel nozzle 96 to the multiple premixing tubes 58.

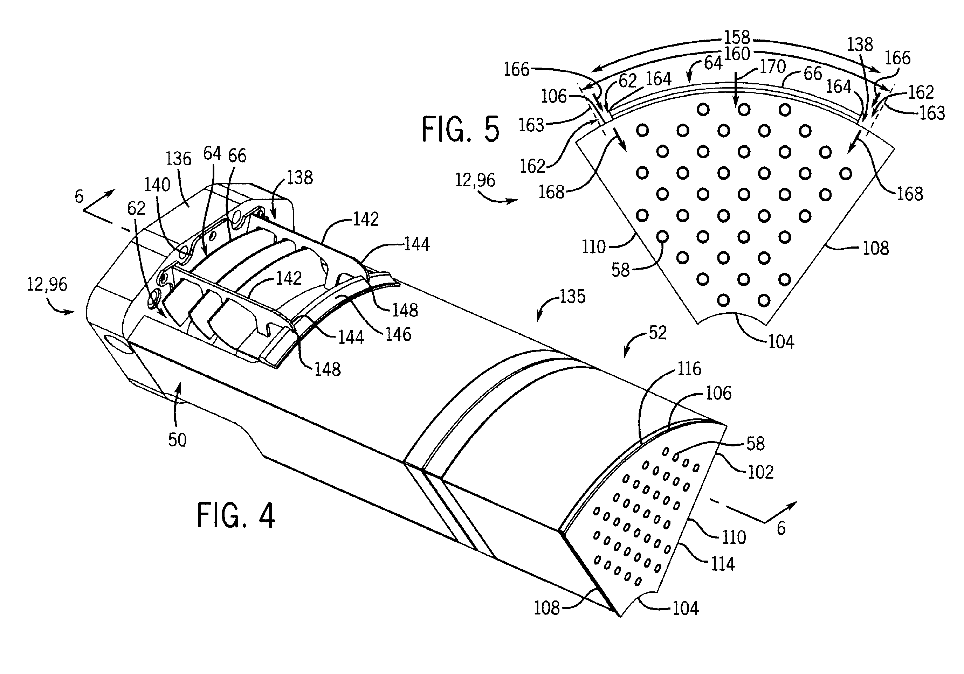

As illustrated, the outer fuel nozzles 96 are disposed circumferentially about the center fuel nozzle 98. As illustrated, five outer fuel nozzles 96 surround the center fuel nozzle 98. However, in certain embodiments, the number of fuel nozzles 12 as well as the arrangement of the fuel nozzles 12 may vary. For example, the number of outer fuel nozzles 136 may be 1 to 20, 1 to 10, or any other number. In the illustrated embodiments, each outer fuel nozzle 96 includes a non-circular perimeter 102. As illustrated, the perimeter 102 includes a truncated pie shape with two parallel sides 104 and 106 and two non-parallel sides 108 and 110. The sides 104 and 106 are arcuate shaped, while sides 108 and 110 are linear (e.g., diverging in radial direction 30). However, in certain embodiments, the perimeter 102 of the outer fuel nozzles 96 may include other shapes, e.g., a pie shape with three sides. The sides 104, 108, and 110 form a first portion 114 of the perimeter 102 and side 106 forms a second portion 116 of the perimeter 102. The first portion 114 of the perimeter 102 is configured to face multiple adjacent sector fuel nozzles 12 (e.g., fuel nozzle segments such as the inner fuel nozzle 98 or the outer fuel nozzles 96). The second portion 116 of the perimeter 102 is configured not to face the multiple adjacent sector fuel nozzles 12. The second portion 116 of the perimeter 102 includes the air inlet 62 (see FIGS. 4 and 5). The second portions 116 of the perimeters 102 of the outer fuel nozzles 96 define a circular perimeter 118 for the multi-nozzle assembly 39 (e.g., segmented nozzle assembly). The circular perimeter 118 defines a circular nozzle area 120 for the nozzle assembly 39. The downstream end portions 52 of the sector fuel nozzles 12 collectively encompass the entire circular nozzle area 120. The perimeter 102 of each outer fuel nozzle 102 includes a region of the circular nozzle area 120. A perimeter 122 of the center fuel nozzle 98 also includes a region of the circular nozzle area 120. The perimeter 122 of the center fuel nozzle 98 is disposed at a central portion 124 of the circular nozzle area 120.

As mentioned above, each outer fuel nozzle 96 includes inlet flow conditioners 64 to evenly distribute air flow to the premixing tubes 58 within each fuel nozzle 96. As illustrated, each inlet flow conditioner 64 is separate from the other inlet flow conditioners 64. Each inlet flow conditioner 64 extends only partially around its respective fuel nozzle 96. For example, each inlet flow conditioner 64 extends only partially around the second region 116 of the perimeter 102 of each outer fuel nozzle 96. However, the multiple inlet flow conditioners 64 together form a segmented inlet flow conditioner 126 extending around the perimeter 118 of the multiple outer fuel nozzles 96 (e.g., multiple outer fuel nozzle segments). In certain embodiments, each air inlet 62 and/or inlet flow conditioner 64 extends approximately 5 to 50, 10 to 40, 15 to 30, or 20 to 25 percent around the perimeter 102 of each outer fuel nozzle 96. Furthermore, each air inlet 62 and/or inlet flow conditioner 64 extends along approximately 50 to 100, 75 to 95, or 80 to 90 of the side 106 of each outer fuel nozzle 96.These inlet flow conditioners 64 cooperate to improve the overall engine performance and to reduce emissions via the even distribution of air to each tube 58 within each outer fuel nozzle 96. In addition, each inlet flow conditioner 64 reduces the possibility of flame holding or flashback within each outer fuel nozzle 96.

FIGS. 4-8 provide greater detail about embodiments of the inlet flow conditioner 64. FIG. 4 is a perspective view of an embodiment of a sector fuel nozzle 12, 96 and an associated inlet flow conditioner 64. As described above, the sector fuel nozzle 12 (e.g., fuel nozzle segment) includes the perimeter 102 that includes the first portion 114 (i.e., defined by sides 104, 108, and 110) and the second portion 116 (i.e. defined by side 106). The sector fuel nozzle 12 includes the upstream end portion 50 and the downstream end potion 52. The downstream end portion 52 includes the plurality of premixing tubes 58. The number and arrangement of the premixing tubes may vary based on the design, function, and application of the fuel nozzle 12. The second portion 116 (i.e., side 106) of the perimeter 102 at the upstream end portion 50 of the sector fuel nozzle 12 includes the air inlet 62. The sector fuel nozzle 12 includes a flange 136. Together, the flange 136 and the air inlet 62 define an opening 138. The inlet flow conditioner 64 is disposed adjacent the air inlet 62. In particular, the inlet flow conditioner 64 is disposed within the opening 138. The inlet flow conditioner 64 is removably coupled (e.g., bolted) to the flange 136 of the sector fuel nozzle 12. In certain embodiments, the inlet flow conditioner 64 is removably coupled to the end cover 40 of the fuel nozzle assembly 39. In some embodiments, the inlet flow conditioner 64 may be coupled to the flange 136 after sector fuel nozzle 12 has been assembled on the end cover 40 of the nozzle assembly 39.

The inlet flow conditioner 62 includes a mounting base 140, a couple of vane supports 142 coupled to the mounting base 140, and the plurality of vanes 66 disposed within and coupled (e.g., welded) to the vane supports 142. The mounting base 140 of the inlet flow conditioner 62 may be coupled (e.g., bolted) to the flange 136 of the sector fuel nozzle 12. The vane supports 142 extend from the mounting base 140 to free end portions 144. The free end portions 144 of the vane supports 142 are free to move relative to the sector fuel nozzle 12 to enable for thermal expansion. As illustrated, the sector fuel nozzle 12 includes a bellmouth feature 146 coupled (e.g., welded) to the side 106 downstream of the air inlet 62. The bellmouth feature 146 includes axial slots 148. The free end portions 144 of the vane supports 142 rest within the axial slots 148 of the bellmouth feature 146 to help block lateral movement (e.g., circumferential) movement of the supports 142. In certain embodiments, the bellmouth feature 146 may not include slots 148 and the free end portions 144 rest on top of the bellmouth feature 146. As illustrated, the vane supports 142 support three vanes 66. However, in certain embodiments, the number of vanes 66 may vary. For example, the number of vanes 66 may be 1 to 20, 1 to 10, 1 to 5, or any other number. By further example, the inlet flow conditioner 64 may include 1, 2, 3, 4, 5, 6, 7, 8, 9, 10, or more vanes 66 with gradually changing angles to distribute the air flow to different depths within the fuel nozzle 96. As described in greater detail below, each vane 66 spans only a portion of the air inlet 66.

The plurality of vanes 66 is configured to turn or guide air flow from an intake direction outside the sector fuel nozzle 12 to a downstream direction inside the fuel nozzle 12 toward the plurality of air-fuel premixing tubes 58. Again, at least two of the vanes 66 have different turning angles relative to one another. In certain embodiments, each of the vanes 66 has different turning angles relative to one another. Together, the different turning angles of the vanes 66 enable an even distribution of air flow to each of the plurality of premixing tubes 58 within the sector fuel nozzle 12. As a result, the even distribution of air may reduce the possibility of flame holding or flashback, reduce emissions, and improve the overall engine performance.

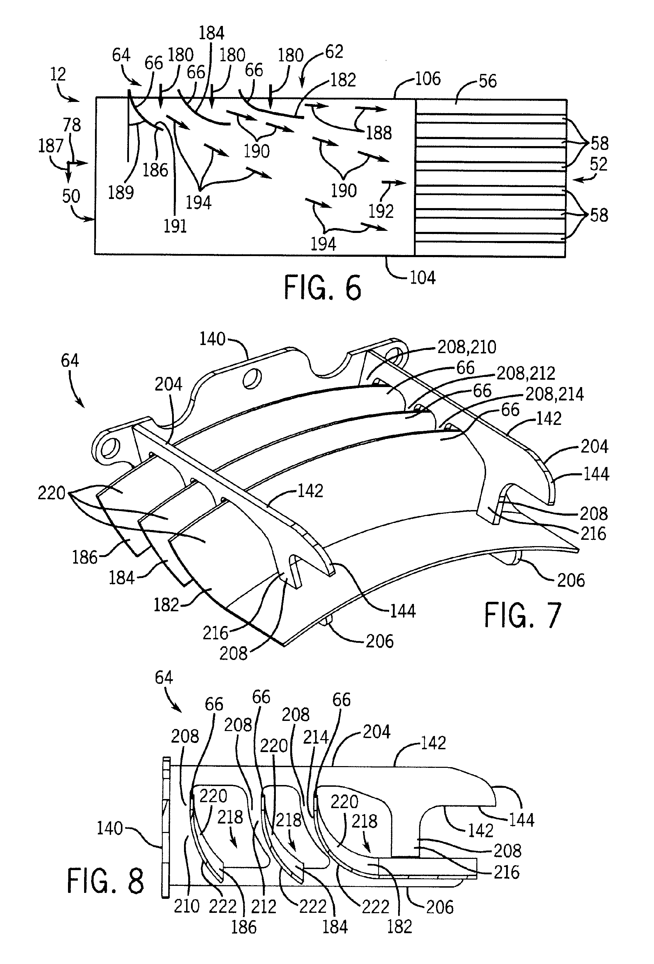

FIG. 5 is a cross-sectional view of an embodiment of the sector fuel nozzle 12, 96 and the associated inlet flow conditioner 64, taken along line 5-5 of FIG. 3. The sector fuel nozzle 12 is as described above. In particular, the inlet flow conditioner 64 is disposed adjacent the air inlet 62 within the opening 134. As illustrated, each vane 66 of the plurality of vanes 66 of the inlet flow conditioner 64 spans only a portion 158 of a total span 160 of the opening 134 of the air inlet 62. For example, in certain embodiments, the portion 158 may be 50 to 10, 75 to 95, or 80 to 90 percent of the total span 160. Due to spanning only a portion 158 of the total span 160, each vane 66 provides air flow spaces 162 between outer edges 163 (indicated by dashed lines) of the inlet opening 62 and opposite tips 164 of each vane 66. The air flow spaces 62 enable additional air flow from outside the sector fuel nozzle 12, as indicated by arrows 166, to flow inside the sector fuel nozzle 12, as indicated by arrows 168. The air flow 168 then flows in a downstream direction towards the plurality of premixing tubes 58 along with the air flow 170 that passes between the vanes 66. Thus, the structure of the inlet flow conditioner 64 enables an even distribution of air to each of the plurality of tubes 58 as described in greater detail in FIG. 6.

FIG. 6 is a cross-sectional view of an embodiment of the sector fuel nozzle 12, 96 and the associated inlet flow conditioner 64, taken along line 6-6 of FIGS. 3 and 4. The sector fuel nozzle 12 is as described above. In particular, the inlet flow conditioner 64 is configured to turn or guide air outside the sector fuel nozzle 12 from an intake direction 180 to a downstream direction (e.g., axial direction 78) inside the sector fuel nozzle 12 toward the plurality of premixing tubes 58 (e.g., air-fuel premixing tubes). In particular, each vane 66 (e.g., vanes 182, 184, and 186) is configured to turn or guide the air from the intake direction 180 to the downstream direction. As illustrated each of the vanes 66 are curved. In certain embodiments, the vanes 66 may include the same radii of curvature. In some embodiments, the vanes 66 may include different radii of curvature relative to each other. Alternatively, in other embodiments, the vanes may be straight. As illustrated, each of the vanes 66 includes the same radial depth (e.g., generally in radial direction 187) into the sector fuel nozzle 12. In certain embodiments, the vanes 66 may include different radial depths into the sector fuel nozzle 12.

As discussed above, at least two of the vanes 66 may include different turning angles relative to each other. In certain embodiments, all of the vanes 66 may include different turning angles relative to each other. For example, an angle 189 of each vane 66 relative to a trailing edge portion 191 of each vane 66 may range from 0 to 170, 90 to 170, 0 to 90, 0 to 45, 10 to 50, 15 to 45, or 20 to 30 degrees. For example, the angle 189 of the vane 66 may be 0, 10, 20, 30, 40, 50, 60, 70, 80, 90, 100, 110, 120, 130, 140, 150, 160, or 170 degrees, or any angle therebetween. The angle 189 of each vane 66 may differ from an adjacent vane by 10 to 200, 20 to 160, 40 to 140, 60 to 120, 80 to 100, 10 to 40, or 20 to 30 percent. In particular, each subsequent vane 66 in the plurality of vanes 66 from the upstream end portion 50 to the downstream end portion of the sector fuel nozzle 12 may be angled more in the downstream direction (e.g., axial direction 78). For example, vane 184 may be more angled in the downstream direction than vane 186, while vane 182 may be more angled in the downstream direction than both vanes 184 and 186. The turning angles of the plurality of the vanes 66 affects the distribution of air flow to each tube 58 of the plurality of tubes 58. In addition, the different turning angles may enable deeper radial penetration (e.g., radial direction 187) of air flow from each subsequent vane 66. For example, turning vane 182, located nearest the downstream end portion 52 of the sector fuel nozzle 12, directs air flow 188 towards the premixing tubes 58 nearest the side 106 of the sector fuel nozzle 12. Turning vane 184, located between vanes 182 and 186, directs air flow 190 towards the premixing tubes 58 located in a central portion 192 of the fuel chamber 56. Turning vane 186 directs air flow 194 towards the premixing tubes 58 nearest side 104 of the sector fuel nozzle 12. Together the different turning angles of the vanes 66 enable an even distribution of air flow to each of the plurality of premixing tubes 58 within the sector fuel nozzle 12. As a result, the even distribution of air may reduce the possibility of flame holding or flashback, reduce emissions, and improve the overall engine performance.

FIGS. 7 and 8 illustrate structural features of embodiments of the inlet flow conditioner 64. In particular, FIGS. 7 and 8 are perspective and sides views, respectively, of an embodiment of the inlet flow conditioner 64. As described above, the inlet flow conditioner 64 includes the mounting base 140, the vane supports 142 coupled to the mounting base 140, and the plurality of vanes 66 (e.g., vanes 182, 184, and 186) disposed within and coupled (e.g., welded) to the vane supports 142. The mounting base 140 of inlet flow conditioner 64 is configured to mount to the end cover 40 of the nozzle assembly 39 or the flange 136 of the sector fuel nozzle 12. Each vane support 142 includes a top portion 204, a bottom portion 206, and multiple extensions 208 (e.g., extensions 210, 212, 214, and 216) extending between the top and bottom portions 204 and 206. In addition, each vane support 142 includes the free end portion 144 as described above. As illustrated, the extensions 210, 212, and 214 curve to conform to the turning angles of blades 186, 184, and 182, respectively. The top portion 204, the bottom portion 206, and the extensions 208 of both vane supports 142 form slots 218 for the plurality of blades 66. Each vane 66 includes a pressure side 220 (e.g., side that initially encounters air flow from the intake direction) configured to face the downstream end portion 52 portion of the sector fuel nozzle 12, and a suction side 222 configured to abut the extensions 208. The extensions 210, 212, and 214 of each vane support 142 are coupled (e.g., welded) to the suction side 222 of each vane 66 (e.g., vanes 186, 184, and 182) of the plurality of vanes 66. In addition, the extension 216 of each vane support 142 is coupled (e.g., welded) to the pressure side 220 of the vane 66, 182.

As mentioned above, the inlet flow conditioner 64 is configured to mount adjacent the air inlet 62 of the sector fuel nozzle 12, 96 (e.g., fuel nozzle segment) of the multi-nozzle assembly 39. In addition, the inlet flow conditioner 64 is configured to extend only partially around the sector fuel nozzle 12. Further, the inlet flow conditioner 64 is configured to turn air flow from the intake direction outside the sector fuel nozzle 12 to the downstream direction inside the fuel nozzle 12. In particular, at least two vanes 66 include different turning angles relative to one another to enable the inlet flow conditioner 64 to evenly distribute air flow to each tube 58 of the plurality of tube 58 of the sector fuel nozzle 12. As a result, the even distribution of air may reduce the possibility of flame holding or flashback, reduce emissions, and improve the overall engine performance.

Technical effects of the disclosed embodiments include providing systems to guide and turn air flow into the sector fuel nozzles 12 of the multi-nozzle assembly 39 of the gas turbine engine 10. In particular, the systems include separate inlet flow conditioners 64 for each sector fuel nozzle 12 that includes multiple air-fuel premixing tubes 58. Each inlet flow conditioner 64 is disposed (e.g., removably coupled to the fuel nozzle assembly 39 or the sector fuel nozzle 12) adjacent the air inlet 62 for each sector fuel nozzle 12. Each inlet flow conditioner 64 turns or guides air flow from the intake direction outside each sector fuel nozzle 12 to the downstream direction inside each sector fuel nozzle 12 towards the air-fuel premixing tubes 58. Each inlet flow conditioner 64 includes multiple vanes 66 that may include different turning angles to evenly distribute air flow towards the multiple air-fuel premixing tubes 58. The even distribution of air flow to each tube 58 may reduce the possibility of flame holding or flashback within each sector fuel nozzle 12, reduce emissions, and improve the overall engine performance.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a first fuel nozzle segment (12, 42, 44, 96) of a multi-nozzle assembly, wherein the first fuel nozzle segment (12, 42, 44, 96) comprises a first air inlet (62), a first plurality of air-fuel premixing tubes (58), and a first air passage extending from the first air inlet (62) to the first plurality of air-fuel premixing tubes (58); and
   a first inlet flow conditioner (64) disposed adjacent the first air inlet (62) of the first fuel nozzle segment (12, 42, 44, 96), wherein the first inlet flow conditioner (64) extends only partially around the first fuel nozzle segment (12, 42, 44, 96), and the first inlet flow conditioner (64) turns air flow from intake direction outside the first fuel nozzle segment (12, 42, 44, 96) to a downstream direction inside the first fuel nozzle segment (12, 42, 44, 96) toward the first plurality of air-fuel premixing tubes (58).
2. The system of clause 1, wherein the first fuel nozzle segment (12, 42, 44, 96) comprises a perimeter (102) having a first portion (114) and a second portion (116), the first portion (114) of the perimeter (102) is configured to face a plurality of adjacent fuel nozzle segments (12, 42, 44, 46, 96, 98), the second portion (116) of the perimeter (102) is configured not to face the plurality of adjacent fuel nozzle segments (12, 42, 44, 46, 96, 98), and the second portion (116) comprises the first air inlet (62).
3. The system of clause 1 or clause 2, wherein the first inlet flow conditioner (64) comprises a first plurality of vanes (66) configured to turn the air flow from the intake direction to the downstream direction.
4. The system of clause 3, wherein the first plurality of vanes (66) comprises at least two first vanes (66, 182, 184, 186) having different turning angles relative to one another.
5. The system of any of clauses 3 to 5, wherein each first vane of the plurality of vanes spans only a first portion of the first air inlet to provide first air flow spaces between the first air inlet and opposite first tips of each first vane.
6. The system of any of clauses 3 to 5, wherein the first inlet flow conditioner comprises a first vane support coupled to a first suction side of each first vane of the first plurality of vanes.
7. The system of any of clauses 6, wherein the first vane support of the first inlet flow conditioner extends from a first mounting base to a first free end portion that is free to move relative to the first fuel nozzle segment.
8. The system of any of clauses 1 to 7, comprising a combustor and/or a gas turbine engine having the multi-nozzle assembly.
9. A system, comprising:
   a first inlet flow conditioner configured to mount adjacent a first air inlet of a first fuel nozzle segment of a multi-nozzle assembly, wherein the first inlet flow conditioner is configured to extend only partially around the first fuel nozzle segment, and the first inlet flow conditioner is configured to turn air flow from an intake direction outside the first fuel nozzle segment to a downstream direction inside the first fuel nozzle segment.

## Claims

1. A system, comprising:
a turbine fuel nozzle assembly (39), comprising:
a first fuel nozzle (12, 42, 44, 96) comprising a first air inlet (62);
a second fuel nozzle (12, 42, 44, 96) comprising a second air inlet (62);
a first inlet flow conditioner (64) disposed adjacent the first air inlet (62) of the first fuel nozzle (12, 42, 44, 96), wherein the first inlet flow conditioner (64) extends only partially around the first fuel nozzle (12, 42, 44, 96); and
a second inlet flow conditioner (64) disposed adjacent the second air inlet (62) of the second fuel nozzle (12, 42, 44, 96), wherein the second inlet flow conditioner (64) extends only partially around the second fuel nozzle (12, 42, 44, 96), and the second inlet flow conditioner (64) is separate from the first inlet flow conditioner (64).

2. The system of claim 1, wherein the turbine fuel nozzle assembly (39) comprises a plurality of fuel nozzles (12, 42, 44, 96) including the first and second fuel nozzles (12, 42, 44, 96), a plurality of inlet flow conditioners (64) including the first and second inlet flow conditioners (64), and the plurality of inlet flow conditioners (64) form a segmented inlet flow conditioner (126) extending around a perimeter (118) of the plurality of fuel nozzles (12, 42, 44, 96).

3. The system of claim 2, wherein the perimeter (118) comprises a circular perimeter (118) defining a circular nozzle area (120) of the plurality of fuel nozzles (12), the first fuel nozzle (12, 42, 44, 96) comprises a first non-circular perimeter (102) comprising a first region of the circular nozzle area (120), and the second fuel nozzle (12, 42, 44, 96) comprises a second non-circular perimeter (102) comprising a second region of the circular nozzle area (120).

4. The system of any of claims 1 to 3, wherein the first inlet flow conditioner (64) is removably coupled to a first flange (136) of the first fuel nozzle (12, 42, 44, 96), and the second inlet flow conditioner (64) is removably coupled to a second flange (136) of the second fuel nozzle (12, 42, 44, 96).

5. The system of any of claims 1 to 4, wherein the first and second inlet flow conditioners (64) are removably coupled to an end cover (40) supporting the turbine fuel nozzle assembly (39).

6. The system of any of claims 1 to 5, wherein the first inlet flow conditioner (64) guides air flow from an intake direction outside the first fuel nozzle (12, 42, 44, 96) to a downstream direction inside the first fuel nozzle (12, 42, 44, 96) toward a first plurality of air-fuel premixing tubes (58), and the second inlet flow conditioner (64) guides air flow from the intake direction outside the second fuel nozzle (12, 42, 44, 96) to the downstream direction inside the second fuel nozzle (12, 42, 44, 96) toward a second plurality of air-fuel premixing tubes (58).

7. The system of claim 6, wherein the first inlet flow conditioner (64) comprises a first plurality of vanes (66) configured to turn the air flow from the intake direction to the downstream direction, and the second inlet flow conditioner (64) comprises a second plurality of vanes (64) configured to turn the air flow from the intake direction to the downstream direction.

8. The system of claim 7, wherein the first plurality of vanes (66) comprises at least two first vanes (66, 182, 184, 186) having different turning angles relative to one another, and the second plurality of vanes (66) comprises at least two second vanes (66, 182, 184, 186) having different turning angles relative to one another.

9. The system of claim 7 or claim 8, wherein each first vane (66, 182, 184, 186) of the first plurality of vanes (66) spans only a first portion (158) of the first air inlet (62) to provide first air flow spaces (162) between the first air inlet (62) and opposite first tips (164) of each first vane (66, 182, 184, 186), and each second vane (66, 182, 184, 186) of the second plurality of vanes (66) spans only a second portion (158) of the second air inlet (62) to provide second air flow spaces (162) between the second air inlet (62) and opposite second tips (164) of each second vane (66, 182, 184, 186).

10. The system of any of claims 7 to 9, wherein the first inlet flow conditioner (64) comprises a first vane support (142) coupled to a first suction side (222) of each first vane (66, 182, 184, 186) of the first plurality of vanes (66), and the second inlet flow conditioner (64) comprises a second vane support (142) coupled to a second suction side (222) of each second vane (66, 182, 184, 186) of the second plurality of vanes (66).

11. The system of claim 10, wherein the first vane support (204) of the first inlet flow conditioner (64) extends from a first mounting base (140) to a first free end portion (144) that is free to move relative to the first fuel nozzle (12, 42, 44, 96), and the second vane support (204) of the second inlet flow conditioner (64) extends from a second mounting base (140) to a second free end portion (144) that is free to move relative to the second fuel nozzle (12, 42, 44, 96).
